# EUROPEAN PATENT APPLICATION

(11) **EP 4 427 901 A1**
(43) Date of publication of application: **11.09.2024**
(21) Application number: 22889719.5
(22) Date of filing: 05.10.2022
(51) Int. Cl.: B29B 9/06, B29C 48/345

(54) **DIE, GRANULATION DEVICE, AND METHOD FOR PRODUCING ORGANIC COMPOSITION PELLETS**

(30) Priority: 05.11.2021 JP 2021181110
(71) Applicant: The Japan Steel Works, Ltd., Tokyo 141-0032 (JP)
(72) Inventor: YATA, Kyohei, Tokyo 141-0032 (JP); ISHIKAWA, Makoto, Tokyo 141-0032 (JP); SHIGEISHI, Takashi, Tokyo 141-0032 (JP); KAJIKAWA, Keisuke, Tokyo 141-0032 (JP); MUNEMASA, Kazumi, Tokyo 141-0032 (JP); KAWANO, Hiroyuki, Tokyo 141-0032 (JP); HASHIMOTO, Tomonori, Tokyo 141-0032 (JP)
(74) Representative: Simmons & Simmons LLP (Munich)
(86) International application number: PCT/JP2022/037337
(87) International publication number: WO 2023/079895

(57) **Abstract**

In a die 30, a plurality of nozzles 51 each comprise a portion 52 that is provided with a nozzle opening diameter 52D, and a portion 53 that is between the portion 52 and an opening 32A, and has a nozzle opening diameter 53D which becomes narrower toward the portion 52. The plurality of nozzles 51 comprise an end nozzle 51E1 disposed at one end of an array of the plurality of nozzles 51 in a Z-direction, and a non-end nozzle 51M1 disposed next to the end nozzle 51E1 in the Z-direction. A length 52L of the portion 52 of the end nozzle 51E1 is shorter than a length 52L of the portion 52 of the non-end nozzle 51M1.

## Description

### TECHNICAL FIELD

The present invention relates to a die in which a source material is made to pass to be molded, a granulator including the die, or a method of manufacturing an organic composite pellet under use of the die.

### BACKGROUND ART

There is a technique of forming a resin pellet by making a source material pass through a die including a plurality of nozzles, and then, cutting the molded source material (see, for example, Patent Document 1 (Japanese Patent Application Laid-open Publication No. 2003-220606) and Patent Document 2 (Japanese Patent Application Laid-open Publication No. 2018-30217)).

### RELATED ART DOCUMENTS

### PATENT DOCUMENTS

Patent Document 1: Japanese Patent Application Laid-open Publication No. 2003-220606
Patent Document 2: Japanese Patent Application Laid-open Publication No. 2018-30217

### SUMMARY OF THE INVENTION

### PROBLEMS TO BE SOLVED BY THE INVENTION

A method of manufacturing a pellet by making a source material pass through a die including a lot of nozzles, and then, cutting the source material having passed therethrough can manufacture a lot of pellets in short time. However, when the source material is made to pass through the die including a lot of nozzles, variation in a passing speed of the source material for each nozzle, if happened, may become a cause of variation in weight of the pellet.

### MEANS FOR SOLVING THE PROBLEMS

A die according to an embodiment disclosed in the present application includes: a first nozzle group in which a plurality of nozzles are next to one another in a first direction; a nozzle support portion having a front surface on which the plurality of nozzles are arranged, a back surface opposite to the front surface, and a first opening communicating with each of the plurality of nozzles of the first nozzle group; a heat-carrier flow channel arranged on both sides of the first nozzle group in transparent plan view viewed from the front surface side and enabling a heat carrier to pass through in the first direction. Each of the plurality of nozzles of the first nozzle group includes a first portion having a first nozzle opening diameter and a second portion arranged between the first portion and the first opening and having a nozzle opening diameter becoming narrower when getting closer to the first portion. The plurality of nozzles include a first end nozzle arranged on either one end of arrangement of the plurality of nozzles in the first direction and a first non-end nozzle next to the first end nozzle in the first direction. A length of the first portion of the first end nozzle is smaller than a length of the first portion of the first non-end nozzle.

A die according to another embodiment includes: a first nozzle group in which a plurality of nozzles are next to one another in a first direction; a nozzle support portion having a front surface on which the plurality of nozzles are arranged, a back surface opposite to the front surface, and a first opening communicating with each of the plurality of nozzles of the first nozzle group; a heat-carrier flow channel arranged on both sides of the first nozzle group in transparent plan view viewed from the front surface side and enabling a heat carrier to pass through in the first direction. Each of the plurality of nozzles of the first nozzle group includes a first portion having a first nozzle opening diameter, a second portion arranged between the first portion and the first opening and having a nozzle opening diameter becoming narrower when getting closer to the first portion, and a third portion arranged between the second portion and the first opening and having a second nozzle opening diameter becoming larger than the first nozzle opening diameter. The plurality of nozzles include a first end nozzle arranged on either one end of arrangement of the plurality of nozzles in the first direction and a first non-end nozzle next to the first end nozzle in the first direction. A length of the third portion of the first end nozzle is larger than a length of the third portion of the first non-end nozzle.

A granulator according to another embodiment includes: a cylindrical extrusion portion enabling a source material to be extruded forward while being pressurized; a die attached to a tip of the extrusion portion; and a cutter portion attached to a tip of the die and enabling a material passed through the die to be cut. The die includes: a first nozzle group in which a plurality of nozzles are next to one another in a first direction; a nozzle support portion having a front surface on which the plurality of nozzles are arranged, a back surface opposite to the front surface, and a first opening communicating with each of the plurality of nozzles of the first nozzle group; and a heat-carrier flow channel enabling a heat carrier to pass through in the first direction. Each of the plurality of nozzles of the first nozzle group includes a first portion having a first nozzle opening diameter and a second portion arranged between the first portion and the first opening and having a nozzle opening diameter becoming narrower when getting closer to the first portion. The plurality of nozzles include a first end nozzle arranged on either one end of arrangement of the plurality of nozzles in the first direction and a first non-end nozzle next to the first end nozzle in the first direction. A length of the first portion of the first end nozzle is smaller than a length of the first portion of the first non-end nozzle.

A granulator according to another embodiment includes: a cylindrical extrusion portion enabling a source material to be extruded forward while being pressurized; a die attached to a tip of the extrusion portion; and a cutter portion attached to a tip of the die and enabling a material passed through the die to be cut. The die includes: a first nozzle group in which a plurality of nozzles are next to one another in a first direction; a nozzle support portion having a front surface on which the plurality of nozzles are arranged, a back surface opposite to the front surface, and a first opening communicating with each of the plurality of nozzles of the first nozzle group; and a heat-carrier flow channel arranged on both sides of the first nozzle group in transparent plan view viewed from the front surface side and enabling a heat carrier to pass through in the first direction. Each of the plurality of nozzles of the first nozzle group includes a first portion having a first nozzle opening diameter, a second portion arranged between the first portion and the first opening and having a nozzle opening diameter becoming narrower when getting closer to the first portion, and a third portion arranged between the second portion and the first opening and having a second nozzle opening diameter becoming larger than the first nozzle opening diameter. The plurality of nozzles include a first end nozzle arranged on either one end of arrangement of the plurality of nozzles in the first direction and a first non-end nozzle next to the first end nozzle in the first direction. A length of the third portion of the first end nozzle is larger than a length of the third portion of the first non-end nozzle.

A method of manufacturing an organic composite pellet according to another embodiment includes: an extruding step of extruding a source material forward while pressurizing it; a molding step of molding the source material extruded in the extruding step by making the source material pass through a die; and a step of forming the organic composite pellet by cutting the source material molded in the molding step. The die includes: a first nozzle group in which a plurality of nozzles are next to one another in a first direction; a nozzle support portion having a front surface on which the plurality of nozzles are arranged, a back surface opposite to the front surface, and a first opening communicating with each of the plurality of nozzles of the first nozzle group; and a heat-carrier flow channel arranged on both sides of the first nozzle group in transparent plan view viewed from the front surface side and enabling a heat carrier to pass through in the first direction. Each of the plurality of nozzles of the first nozzle group includes a first portion having a first nozzle opening diameter and a second portion arranged between the first portion and the first opening and having a nozzle opening diameter becoming narrower when getting closer to the first portion. The plurality of nozzles include a first end nozzle arranged on either one end of arrangement of the plurality of nozzles in the first direction and a first non-end nozzle next to the first end nozzle in the first direction. A length of the first portion of the first end nozzle is smaller than a length of the first portion of the first non-end nozzle.

### EFFECTS OF THE INVENTION

According to a die disclosed in the present application, variation in weight of an organic composite pellet can be decreased.

### BRIEF DESCRIPTIONS OF THE DRAWINGS

FIG. 1 is a schematic diagram showing a configuration example of a granulator of an embodiment according to one embodiment.
FIG. 2 is an explanatory diagram showing an example of a process flow of a method of manufacturing an organic composite pellet under use of the granulator shown in FIG. 1.
FIG. 3 is a plan view of the die shown in FIG. 1 in view from an extrusion portion side.
FIG. 4 is a plan view of the die shown in FIG. 1 in view from a cutter portion side.
FIG. 5 is an enlarged plan view of an A portion of FIG. 4.
FIG. 6 is an enlarged cross-sectional view taken along a line B-B of FIG. 5.
FIG. 7 is a plan view showing a general positional relation between a nozzle group and a heat-carrier flow channel in plan view viewed from a front surface.
FIG. 8 is an explanatory diagram schematically showing a structural difference between a plurality of end nozzles and non-end nozzles included in one nozzle group shown in FIG. 5.
FIG. 9 is an enlarged cross-sectional view taken along a line C-C of FIG. 5.
FIG. 10 is an explanatory diagram schematically showing a modification example of the plurality of nozzles shown in FIG. 6.
FIG. 11 is an explanatory diagram showing a nozzle according to a modification example of FIG. 10.

### BEST MODE FOR CARRYING OUT THE INVENTION

Hereinafter, embodiments will be described in detail with reference to examples and drawings. Note that components having the same function are denoted by the same reference signs throughout all the drawings for describing the embodiments, and the repetitive description thereof will be omitted.

### <Granulator>

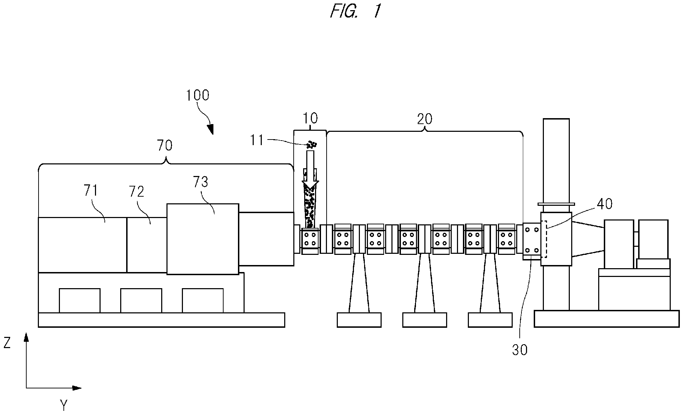

FIG. 1 is a schematic diagram showing a configuration example of a granulator according to the present embodiment. The granulator 100 shown in FIG. 1 is used as a pretreatment apparatus embedded in a system manufacturing a product such as elastomer, general-use resin or engineering plastic, and used for manufacturing the organic composite pellet to be the source material of the product. The granulator 100 includes: a source-material supplying portion 10; a cylindrical extrusion portion 20 enabling a source material 11 to be extruded forward while being pressurized; a die 30 attached to a tip of the extrusion portion 20; and a cutter portion 40 attached to a tip of the die 30 and enabling a material passed through the die 30 to be cut.

The granulator 100 includes a driving portion 70 driving a screw (its illustration is omitted) of the extrusion portion 20. The driving portion 70 includes a motor 71, a coupling 72 and a speed reducer 73. The speed reducer 73 is an apparatus outputting a torque in accordance with a degree of speed reduction of a rotary speed of the motor. The speed reducer 73 shown in FIG. 1 has a function of transmitting a driving force of the motor 71 to a driving shaft. The coupling 72 is arranged between the motor 71 and the speed reducer 73, and the motor 71 and the speed reducer 73 are connected to each other through the coupling 72. The coupling 72 has a torque limiter function of cancelling the connection between the motor 71 and the speed reducer 73 when anomaly of the torque is detected.

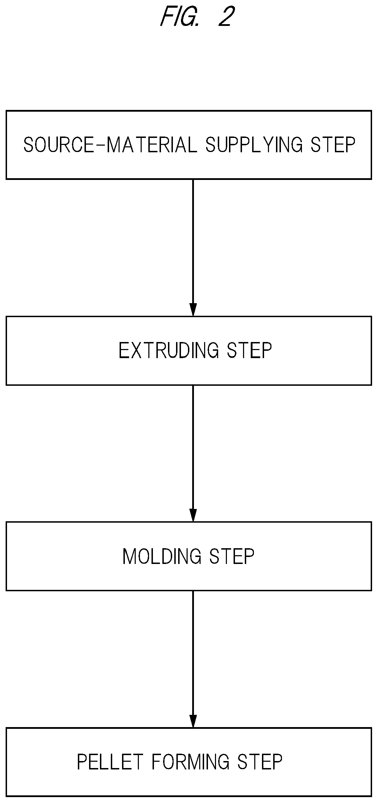

FIG. 2 is an explanatory diagram showing an example of a process flow of a method of manufacturing the organic composite pellet under use of the granulator shown in FIG. 1. An outline of the method of manufacturing the organic composite pellet will be described below with reference to FIGs. 1 and 2. As shown in FIG. 2, the method of manufacturing the organic composite pellet according to the present embodiment includes a source-material supplying step, an extruding step, a molding step and a pellet forming step.

In the source-material supplying step, an organic material that is the source material 11 is supplied from the source-material supplying portion 10 shown in FIG. 1. The source material 11 supplied from the source-material supplying portion 10 is an organic composition functioning as a source material such as elastomer, general-use resin, engineering plastic or others.

In the extruding step, the source material 11 is extruded forward (in a direction travelling from the source-material supplying portion 10 side toward the die 30 shown in FIG. 1) while being pressurized. The extrusion portion 20 includes the driving shaft (its illustration is omitted) extending in a direction "D" that is an extending direction of the extrusion portion, and a plurality of screws rotating around the driving shaft. The source material 11 supplied from the source-material supplying portion 10 is extruded forward by the rotary force of the screws of the extrusion portion 20. The extrusion portion 20 includes a plurality of types of screws controlling a forward transport speed of the source material 11. For example, the extrusion portion 20 includes a screw rotating to feed a transport target forward at a first speed, a screw rotating to feed the transport target forward at a speed slower than the first speed, a screw rotating to push back the transport target, and a screw arranged to block the forward transport of the transport target. The extrusion portion 20 has a structure enabling the transport target to be pressurized at a part in the extrusion portion 20 by combination of the various types of screws. Although the source material 11 may contain moisture, the moisture contained in the source material 11 can be removed in the extruding step if needed.

In the molding step, the source material 11 having reached the tip of the extrusion portion 20 is pushed against the die 30. Although described in detail later, the die 30 includes a plurality of nozzles, and the source material 11 passes through any one of the plurality of nozzles of the die 30, and is extruded to the front side of the die 30. The source material 11 having passed through the die 30 is molded into a pillar shape depending on an opening shape of the nozzle (such as a circular pillar shape formed after the source material passes through the nozzle having the circular opening shape).

In the pellet forming step, the molded member of the source material 11 is cut by the cutter portion 40 attached to the tip of the die 30. The cutter portion 40 is, for example, a rotary blade, and continuously cuts the molded member of the source material 11 continuously discharged from an outlet port of the die 30. As a result, from an outlet port of the cutter portion 40, a lot of organic composite pellets are continuously discharged. The cutter portion 40 is, for example, a cutter that is called underwater cutter, and water is supplied to its part cutting the source material. The pellet formed by the cutter portion 40 is transported to a not-illustrated dewatering step by circulating water.

The resultant pellet in the pellet forming step is kneaded together with, for example, a functional filler as a secondary source material or others to provide a functional pellet with an additional value. This functional pellet is used for various products using the general-use resin or the engineering plastic.

### <Die>

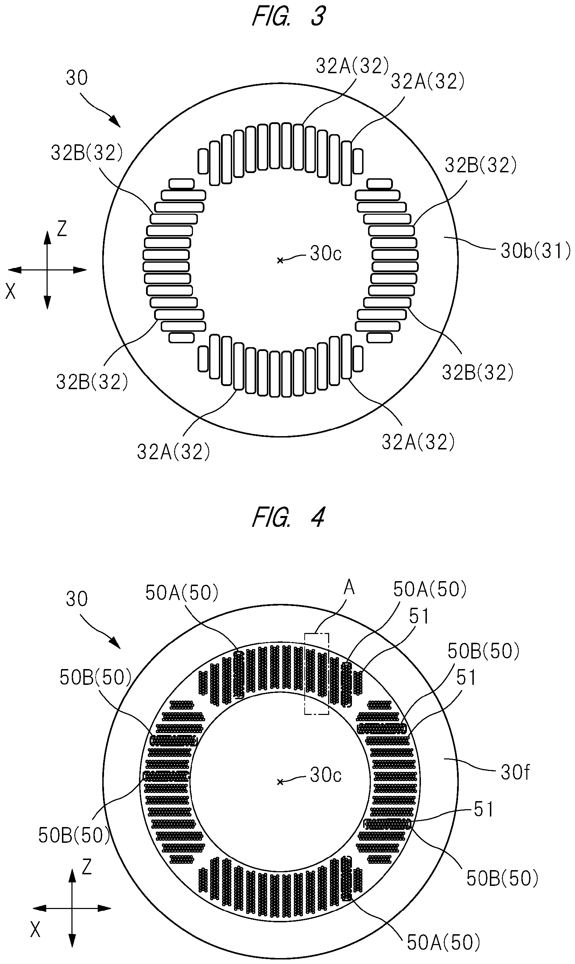

Next, a detailed structure of the die shown in FIG. 1 will be explained. FIG. 3 is a plan view of the die shown in FIG. 1 in view from the extrusion portion side. FIG. 4 is a plan view of the die shown in FIG. 1 in view from the cutter portion side. FIGs. 3 and 4 show only a characteristic part of a configuration of the die 30. However, as a modification example, the die 30 may be formed in a part (such as an opening used for positional alignment or fixing the die 30) other than the part shown in FIG. 3 and 4. In the following explanation, a surface shown in FIG. 3 among surfaces of the die 30, in other words, a surface in view from the extrusion portion 20 side in FIG. 1 is called back surface 30b. On the other hand, a surface shown in FIG. 4 among surfaces of the die 30, in other words, a surface in view from the cutter portion 40 side in FIG. 1 is called front surface 30f.

The die 30 includes a nozzle group 50 (see FIG. 4) in which a plurality of nozzles 51 (see FIG. 4) are arranged, and a nozzle support portion 31 including an opening 32 (see FIG. 3) communicating with each of the plurality of nozzles 51 of the nozzle group 50. The die 30 has the front surface 30f (see FIG. 4) on which the plurality of nozzles 51 are arranged, and the back surface 30b opposite to the front surface 30f.

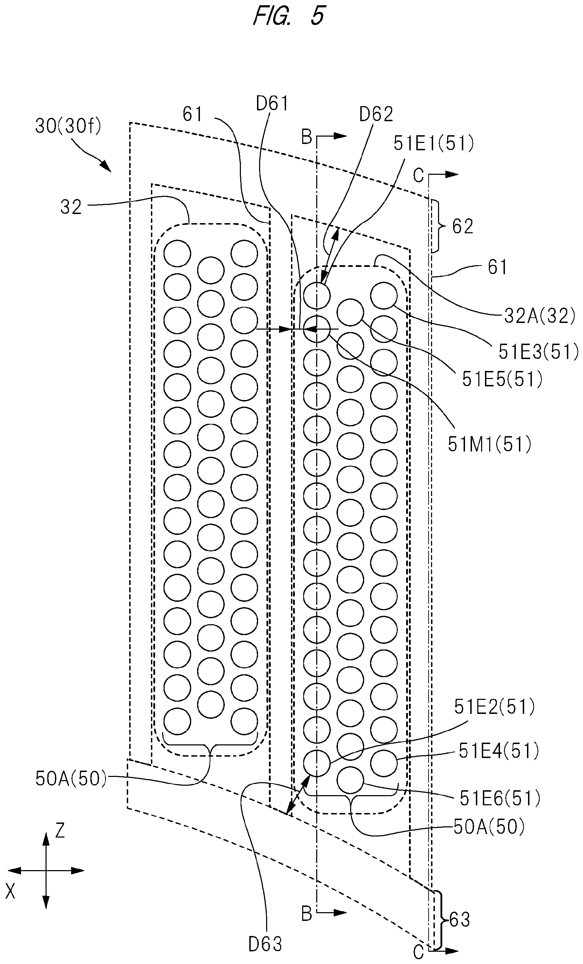

As shown in FIG. 3, a plurality of openings (source-material introducing portion) 32 are formed in the back surface 30b of the die 30. The plurality of openings 32 include a plurality of openings (source-material introducing portion) 32A extending in a Z direction and arranged in an X direction crossing the Z direction, and a plurality of openings (source-material introducing portion) 32B extending in the X direction and arranged in the Z direction. Each of the plurality of openings 32 is a hole (opening) formed from the back surface 30b toward the front surface 30f (see FIG. 4). Each of the plurality of openings 32 functions as the source-material introducing portion introducing the source material 11 extruded by the extrusion portion 20 shown in FIG. 1 toward the nozzle 51 (see FIG. 4). In plan view viewed from the back surface 30b, the plurality of openings 32 are formed in an annular region centering a center 30c of the nozzle support portion 31. In transparent plan view of the front surface 30f, an outer shape of the nozzle support portion 31 is circular. A plurality of nozzle groups 50A are arranged in a circumferential direction of the nozzle support portion 31. Each structure of the plurality of nozzle groups 50 is the same as a structure of a nozzle group 50A described later with reference to FIGs. 5 to 8.

As shown in FIG. 4, the plurality of nozzles 51 are arranged on the front surface 30f of the die 30. Each of the plurality of nozzles 51 is formed to communicate with any one of the plurality of openings 32 shown in FIG. 3. The source material 11 (see FIG. 1) introduced into any of the plurality of openings 32 passes through inside of the nozzle 51, and is discharged to the front surface 30f side. In the present embodiment, a group made of the plurality of nozzles 51 communicating with one opening 32 will be explained as the nozzle group 50. The plurality of nozzle groups 50 (in other words, the plurality of nozzles 51) are formed in an annular region on a concentric circle with the center 30c of the nozzle support portion 31 in plan view viewed from the front surface 30f side.

The plurality of nozzle groups 50 includes a nozzle group 50A in which the plurality of nozzles 51 are arranged in the Z direction and a nozzle group 50B in which the plurality of nozzles 51 are arranged in the X direction.

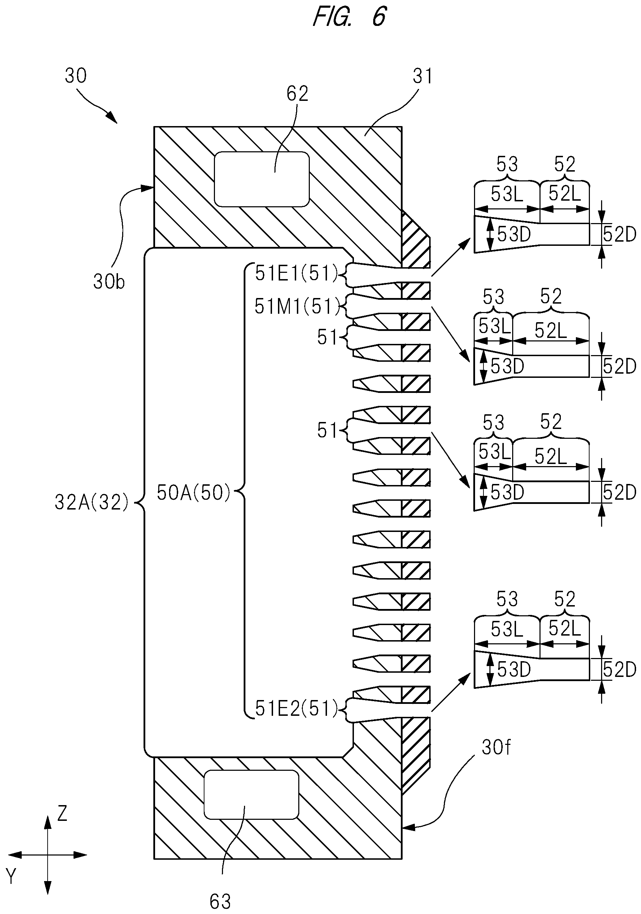

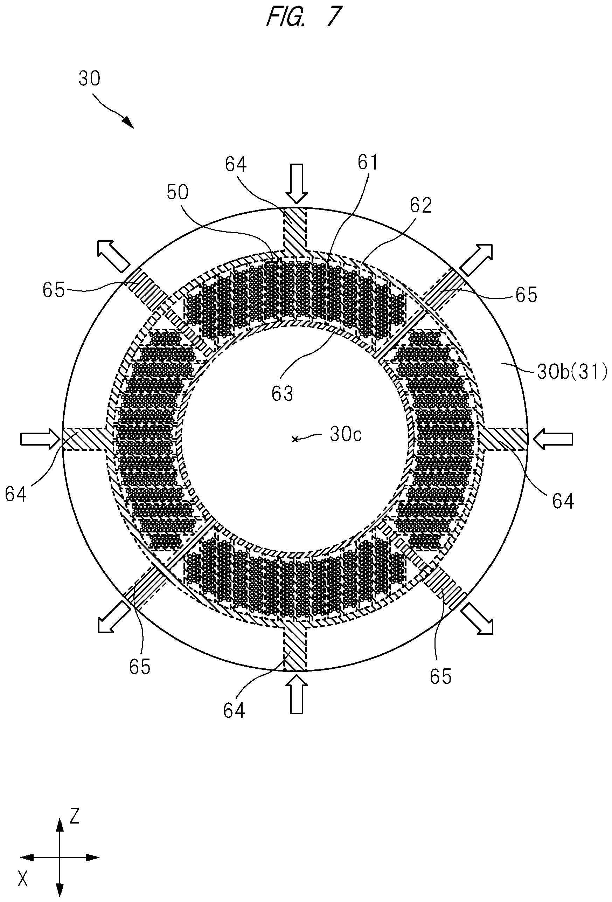

The nozzle group 50A and the opening 32A shown in FIGs. 5 and 6 will be exemplified and explained below as one example of structures of the plurality of nozzle groups 50 and the plurality of openings 32. Each of the plurality of nozzle groups 50 shown in FIG. 4 and the plurality of openings 32 shown in FIG. 3 has the same structure as those of the nozzle group 50A and the opening 32A explained below. FIG. 5 is an enlarged plan view of an A portion of FIG. 4. FIG. 6 is an enlarged cross-sectional view taken along a line B-B of FIG. 5. FIG. 7 is a plan view showing a general positional relation between the nozzle group and the heat-carrier flow channel in plan view viewed from the front surface. In FIG. 5, an outline of the opening 32 and an outline of the heat-carrier flow channel are illustrated with a dotted line. In FIG. 7, the outline of the heat-carrier flow channel is illustrated with a dotted line, and the heat-carrier flow channel is hatched.

As shown in FIG. 5, the die 30 includes the nozzle group 50A in which the plurality of nozzles 51 are next to one another in the Z direction. The die 30 has the front surface 30f (see FIG. 6) on which the plurality of nozzles 51 are arranged and the back surface 30b (see FIG. 6) opposite to the front surface 30f, and further includes the nozzle support portion 31 including the opening 32A communicating with each of the plurality of nozzles 51 of the nozzle group 50A. The die 30 includes the heat-carrier flow channel 61 arranged on both sides of the nozzle group 50A in transparent plan view viewed from the front surface 30f side and enabling the heat carrier to flow in the Z direction.

The heat-carrier flow channel 61 is a path in which the heat carrier flows. As the heat carrier, for example, oil, vapor or others may be used. By the flow of the heat carrier near the nozzle 51, decrease in fluidity of the source material 11 (see FIG. 1) inside the nozzle 51 can be suppressed. As shown in FIG. 7, as the heat-carrier flow channel, the die 30 includes not only the heat-carrier flow channel 61 but also a heat-carrier supplying flow channel 62 that supplies the heat carrier to the heat-carrier flow channel 61 and a heat-carrier discharging flow channel 63 that is a path for discharging the heat carrier fed from the heat-carrier flow channel 61. The heat carrier is supplied from a heat-carrier introducing portion 64 to the heat-carrier flow channel 61 through the heat-carrier supplying flow channel 62. As shown in FIG. 5, each of the plurality of heat-carrier flow channels 61 is arranged between the adjacent nozzle groups 50, and extends in the Z direction that is the extending direction of the nozzle group 50. Therefore, the heat carrier supplied to the heat-carrier flow channel 61 is thermally exchanged with the source material inside the nozzle 51 to suppress the temperature decrease of the source material. The heat carrier having been thermally exchanged with the source material is fed from the heat-carrier flow channel 61 to the heat-carrier discharging portion 65 through the heat-carrier discharging flow channel 63. FIG. 5 shows only a portion corresponding to the configuration portion of the die 30. However, the heat carrier can be used while being circulated by, for example, making connection between the heat-carrier introducing portion 64 and the heat-carrier discharging portion 65 shown in FIG. 5, between which a heating apparatus for the heat carrier interposes.

Here, from the inventor's studies, it has been found out that the following problems are caused when all the plurality of nozzles 51 of the nozzle group 50 have the same shape as one another. That is, a discharge speed of the source material from an end nozzle 51E1 arranged at an end of the arrangement of the plurality of nozzles 51 tends to be slower than a discharge speed of the source material from another nozzle 51. This tendency depends on a viscosity of the source material, and easily appears particularly when a high-viscosity source material is used. As described above, when the discharge speed of the source material from the specific nozzle 51 is slower than the discharge speed of the source material from another nozzle 51, a weight of the pellet formed after passing through the nozzle 51 having the slow discharge speed is smaller than a weight of another pellet. In other words, in a method of effectively manufacturing the organic composite pellet under use of a lot of nozzles 51, this becomes a cause of increase in variation of the weight of the resultant pellet.

A reason why the discharge speed of the source material from the end nozzle 51E1 tends to be slower than the discharge speed of the source material from another nozzle 51 is considered to be the following two reasons. The first reason is influence of a static pressure provided when the source material is pushed from the opening 32A that is the source-material introducing portion to be divided into the plurality of nozzles 51. As shown in FIG. 6, each of the plurality of nozzles 51 communicates with one opening 32A. Therefore, if there is difference in the static pressure provided when the source material is pushed from the opening 32A into the plurality of nozzles 51, there is difference in a flow speed of the source material pushed into each nozzle 51. Each of the end nozzle 51E1 and an end nozzle 51E2 of the plurality of nozzles 51 shown in FIG. 6 is close to a wall surface of an inner wall of the opening 32A, and therefore, tends to have a large static pressure provided when the source material is pushed thereto.

The second reason why the discharge speed of the source material from the end nozzle 51E1 tends to be slower than the discharge speed of the source material from another nozzle 51 is influence of a heating property of the source material provided when the source material passes through the plurality of nozzles 51. Other nozzle 51 than the end nozzle 51E1 and the end nozzle 51E2 is surrounded by a different nozzle 51 or the heat-carrier flow channel 61 in plan view, and therefore, the temperature of the source material provided when the source material passes through the nozzle 51 is difficult to be lowered. On the other hand, the end nozzle 51E1 and the end nozzle 51E2 include a part not surrounded by the different nozzle 51 and the heat-carrier flow channel 61 in plan view. Therefore, in the end nozzle 51E1 and the end nozzle 51E2, the temperature of the source material is easier to be lowered than the other nozzle 51, and the discharge speed of the source material is easier to decrease because of this.

In the present embodiment in consideration of the above-described study results, the structure of the nozzle 51 is developed in a viewpoint of the decrease in the variation of the static pressure of the plurality of nozzles 51 included in the nozzle group 50A. That is, as shown in FIG. 6, each of the plurality of nozzles 51 of the nozzle group 50A has a portion 52 having a nozzle opening diameter 52D and a portion 53 arranged between the portion 52 and the opening 32A and having a nozzle opening diameter 53D becoming narrower when getting closer to the portion 52. The plurality of nozzles 51 include the end nozzle 51E1 arranged on one end of the arrangement of the plurality of nozzles 51 in the Z direction and a non-end nozzle 51M1 next to the end nozzle 51E1 in the Z direction. A length 52L of the portion 52 of the end nozzle 51E1 is smaller than a length 52L of the portion 52 of the non-end nozzle 51M1.

The above-described structure can decrease the difference between the static pressure of the end nozzle 51E1 and the static pressure of the non-end nozzle 51M1 provided when the source material is pushed from the opening 32A into the plurality of nozzles 51. As a result, the difference between the discharge speed of the source material from the end nozzle 51E1 and the discharge speed of the source material from the non-end nozzle 51M1 can be decreased, and therefore, the variation in the weight of the resultant organic composite pellet can be decreased.

In the example shown in FIG. 6, the portion 52 of each of the plurality of nozzles 51 extends to have a constant nozzle opening diameter 52D. However, the nozzle opening diameter 52D may shift from a design value because of influence of the process accuracy or others.

As shown in FIG. 6, the nozzle group 50A further includes an end nozzle 51E2 arranged on an opposite end to the end nozzle 51E1 in the Z direction. A length 52L of the portion 52 of the end nozzle 51E2 is smaller than a length 52L of the portion 52 of the non-end nozzle 51M1. In the example shown in FIG. 6, the length 52L of the portion 52 of the end nozzle 51E2 is the same as the length 52L of the portion 52 of the end nozzle 51E1. However, in order to adjust the static pressure, the length 52L of the portion 52 of the end nozzle 51E2 may be set to be not the same but different from the length 52L of the portion 52 of the end nozzle 51E1.

As a modification example of FIG. 6, the length 52L of the portion 52 of the end nozzle 51E2 may be the same as the length 52L of the portion 52 of the non-end nozzle 51M1 although not illustrated. In this case, the discharge speed of the source material from the end nozzle 51E2 is possibly slower than the discharge speed of the source material discharged from another nozzle 51. However, at least when the length 52L of the portion 52 of the end nozzle 51E1 is shorter than the length 52L of the portion 52 of the non-end nozzle 51M1, the variation in the weight of the pellet formed after passing through the end nozzle 51E1 can be decreased. Of course, as shown in FIG. 6, it is preferable also to take a countermeasure for decreasing the static pressure of the end nozzle 51E2.

In the example shown in FIG. 6, each other nozzle 51 than the end nozzle 51E1 and the end nozzle 51E2 has the same structure as that of the non-end nozzle 51M1. In other words, the length 52L of the portion 52 of each other nozzle 51 (non-end nozzle) than the end nozzle 51E1 and the end nozzle 51E2 is the same as the length 52L of the portion 52 of the non-end nozzle 51M1. However, in order to adjust the static pressure, the lengths 52L of the portions 52 of the plurality of non-end nozzles (nozzle 51) may be different from one another.

As shown in FIG. 5, in the present embodiment, the plurality of nozzles 51 of the nozzle group 50A are arranged in plural rows in the X direction crossing the Z direction. In the example shown in FIG. 5, the Z direction and the X direction are orthogonal to each other, and the plurality of nozzles 51 are arranged in three rows. In this case, as similar to the cases of the end nozzle 51E1 and the end nozzle 51E2 shown in FIG. 6, it is preferable to take a countermeasure for decreasing the static pressure of the end nozzle arranged at the end of the arrangement of the plurality of nozzles 51 arranged in three rows .

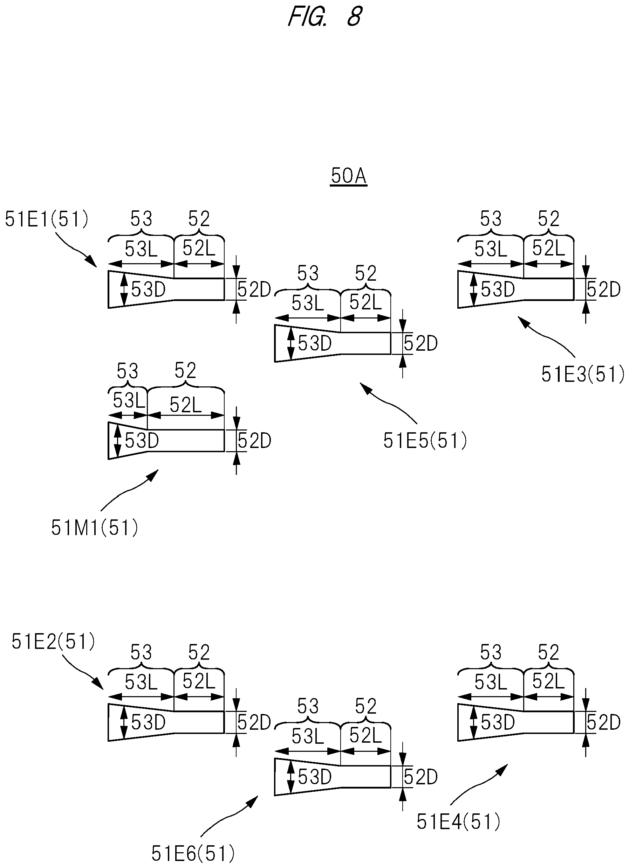

The plurality of end nozzles included in the nozzle group 50A can be described as follows. FIG. 8 is an explanatory diagram schematically showing a structural difference between a plurality of end nozzles and non-end nozzles included in one nozzle group shown in FIG. 5.

The nozzle group 50A shown in FIG. 5 further includes an end nozzle 51E3 next to the end nozzle 51E1 in the X direction crossing the Z direction. As shown in FIG. 8, the length 52L of the portion 52 of the end nozzle 51E3 is smaller than the length 52L of the portion 52 of the non-end nozzle 51M1.

The nozzle group 50A shown in FIG. 5 further includes an end nozzle 51E4 arranged on an end opposite to the end nozzle 51E3 in the Z direction. As shown in FIG. 8, the length 52L of the portion 52 of the end nozzle 51E4 is smaller than the length 52L of the portion 52 of the non-end nozzle 51M1.

The nozzle group 50A shown in FIG. 5 further includes an end nozzle 51E5 arranged at a row between the end nozzle 51E1 and the end nozzle 51E3 in the X direction crossing the Z direction. As shown in FIG. 8, the length 52L of the portion 52 of the end nozzle 51E5 is smaller than the length 52L of the portion 52 of the non-end nozzle 51M1.

The nozzle group 50A shown in FIG. 5 further includes an end nozzle 51E6 arranged on an end opposite to the end nozzle 51E5 in the Z direction. As shown in FIG. 8, the length 52L of the portion 52 of the end nozzle 51E6 is smaller than the length 52L of the portion 52 of the non-end nozzle 51M1.

In the example shown in FIG. 8, the respective lengths 52L of the portions 52 of the end nozzles 51E1, 51E2, 51E3, 51E4, 51E5 and 51E6 are the same as one another. However, as a modification example, the length 52L of the portion 52 of at least any one or more of the end nozzles 51E1, 51E2, 51E3, 51E4, 51E5 and 51E6 may be different from the length 52L of the portion 52 of other end nozzle. For example, in the end nozzle 51E6 of the end nozzles 51E1, 51E2, 51E3, 51E4, 51E5 and 51E6 shown in FIG. 5, the temperature of the source material is particularly easier to decrease than other end nozzles. On the other hand, in the end nozzle 51E5, the temperature of the source material is more difficult to decrease than other end nozzles. In this case, since the length 52L of the portion 52 of the end nozzle 51E6 is larger than the length 52L of the portion 52 of the end nozzle 51E5, the difference in the static pressure between the end nozzle 51E5 and the end nozzle 51E6 can be decreased.

In the present embodiment, the method of adjusting the static pressure by adjusting the length 52L of the portion 52 while regarding each of the plurality of nozzles 51 to be divided into the portion 52 and the portion 53 has been explained. However, in the method of manufacturing the organic composite pellet of the present embodiment, the cutter portion 40 (see FIG. 1) is arranged at the tip of the nozzle 51, and the pellet is formed by causing the cutter portion 40 to sequentially cut the source material discharged from the plurality of nozzles 51. Therefore, a total value of the length 52L of the portion 52 and the length 53L of the portion 53 is preferably the same among the plurality of nozzles 51.

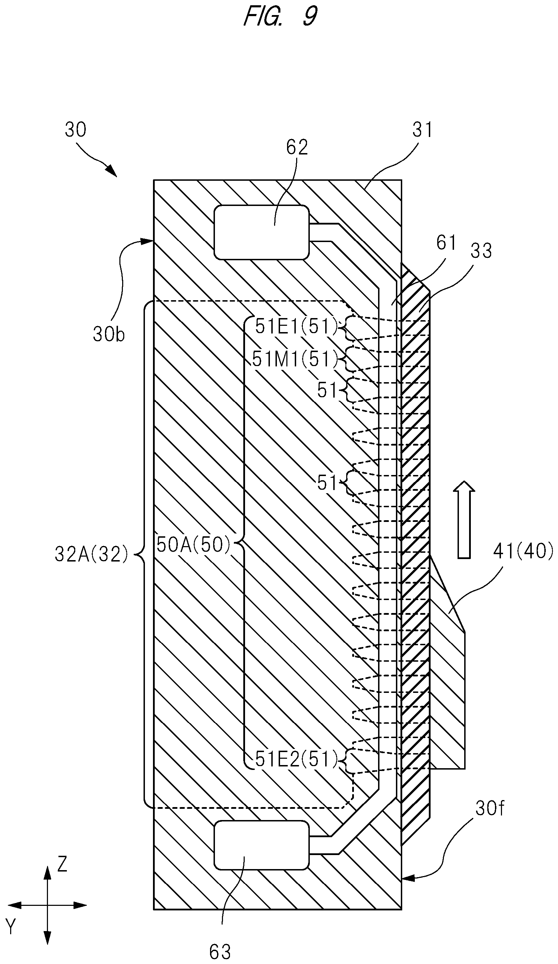

Incidentally, in consideration of the second reason, as another method of suppressing the decrease in the discharge speed of the source material discharged from the end nozzle 51E1 shown in FIG. 6, a method of making the end nozzle 51E1 close to the heat-carrier supplying flow channel 62 is considerable. Alternatively, as another method of suppressing the decrease in the discharge speed of the source material discharged from the end nozzle 51E2 shown in FIG. 6, a method of making the end nozzle 51E2 close to the heat-carrier discharging flow channel 63 is considerable. FIG. 9 is an enlarged cross-sectional view taken along a line C-C of FIG. 5. In FIG. 9, outlines of the opening 32A and the plurality of nozzles 51 shown in FIG. 6 are illustrated with a dotted line.

As shown in FIG. 9, in the pellet forming step of the method of manufacturing the organic composite pellet of the present embodiment, the organic composition discharged from the nozzle 51 is cut by the rotation of the rotary blade 41 of the cutter portion 40. A hard layer 33 is formed in each discharging port of the plurality of nozzles 51, and the rotary blade 41 operates along a surface of the hard layer 33.

Here, the heat-carrier supplying flow channel 62 needs to stably supply the heat carrier to each of a lot of heat-carrier flow channels 61, and therefore, an opening cross-sectional area of the heat-carrier supplying flow channel 62 is larger than an opening cross-sectional area of the heat-carrier flow channel 61. Similarly, the heat carrier flows from a lot of heat-carrier flow channels 61 into the heat-carrier discharging flow channel 63, and therefore, an opening cross-sectional area of the heat-carrier discharging flow channel 63 is larger than an opening cross-sectional area of the heat-carrier flow channel 61. When the heat-carrier supplying flow channel 62 or the heat-carrier discharging flow channel 63 having the large opening cross-sectional area is near the nozzle 51, a problem may arise in a viewpoint of strength of the nozzle support portion 31. That is, the nozzle support portion 31 near the heat-carrier supplying flow channel 62 or the heat-carrier discharging flow channel 63 is possibly deformed by a load of the operation of the rotary blade 41 along the hard layer 33. In order to suppress such deformation, it is preferable to sufficiently separate the heat-carrier supplying flow channel 62 or the heat-carrier discharging flow channel 63 from the nozzle 51.

As shown in FIG. 4, in transparent plan view viewed from the front surface 30f side, an outer shape of the nozzle support portion 31 is circular. The plurality of nozzle groups 50A are arranged in a circumferential direction of the nozzle support portion 31. As shown in FIG. 7, the heat-carrier supplying flow channel 62 extending in the circumferential direction of the circular nozzle support portion 31 and communicating with the heat-carrier flow channel 61 is arranged between the outer circumference of the nozzle support portion 31 and the opening 32A (see FIG. 5). As shown in FIG. 5, a gap distance D62 between the heat-carrier supplying flow channel 62 and the end nozzle 51E1 is larger than a gap distance D61 between the heat-carrier flow channel 61 and the non-end nozzle 51M1.

As shown in FIG. 7, the heat-carrier discharging flow channel 63 extending in the circumferential direction of the circular nozzle support portion 31 and communicating with the heat-carrier flow channel 61 is arranged between the center of the nozzle support portion 31 and the opening 32A (see FIG. 5). As shown in FIG. 5, a gap distance D63 between the heat-carrier discharging flow channel 63 and the end nozzle 51E2 is larger than the gap distance D61 between the heat-carrier flow channel 61 and the non-end nozzle 51M1.

In the present embodiment, the static pressure of the nozzle 51 is adjusted by the adjustment of the length 52L of the portion 52 explained with reference to FIGs. 6 and 8, and therefore, the gap distance D62 and the gap distance D63 can be made large as shown in FIG. 5. As a result, the deformation of the nozzle support portion 31 can be prevented.

As shown in FIG. 9, in the pellet forming step, in order to cause the rotary blade 41 to collectively cut the organic composition discharged from each of the plurality of nozzles 51, positions of outlet ports of the plurality of nozzles 51 in the Y direction shown in FIG. 6 are preferably the same as one another. Therefore, the total value of the length 52L and the length 53L of the end nozzle 51E1 is preferably the same as the total value of the length 52L and the length 53L of the non-end nozzle 51M1. Similarly, the total value of the length 52L and the length 53L of the end nozzle 51E2 is preferably the same as the total value of the length 52L and the length 53L of the non-end nozzle 51M1.

In FIGs. 5 to 9, note that the opening 32A and the nozzle group 50A (see FIG. 5) in which the plurality of nozzles 51 are arranged in the Z direction among the plurality of nozzle groups 50 shown in FIG. 4 have been exemplified and explained. However, the explanation regarding the nozzle group 50A may be also applied to the opening 32B shown in FIG. 3 and the nozzle group 50B in which the plurality of nozzles 51 are arranged in the X direction orthogonal to the Z direction among the plurality of nozzle groups 50 shown in FIG. 4. In this case, the explanation regarding the opening 32A and the nozzle group 50A may be applied thereto along with the rephrasing of the Z direction as the X direction and the rephrasing of the X direction as the Z direction.

The example shown in FIG. 5 shows the example in which the nozzle group 50A is made of the plurality of nozzles 51 arranged in three rows in the X direction. However, the number of rows of the nozzles 51 making the nozzle group 50A is not limited to three as shown in FIG. 5, and the present invention is applicable to various modification examples. For example, the nozzle group 50A may be formed for each one row. As another modification example, the nozzle group 50A may be made of the plurality of nozzles 51 arranged in two, four or more rows in the X direction. The same goes for the nozzle group 50B shown in FIG. 4.

### <Modification Example of Nozzle Shape>

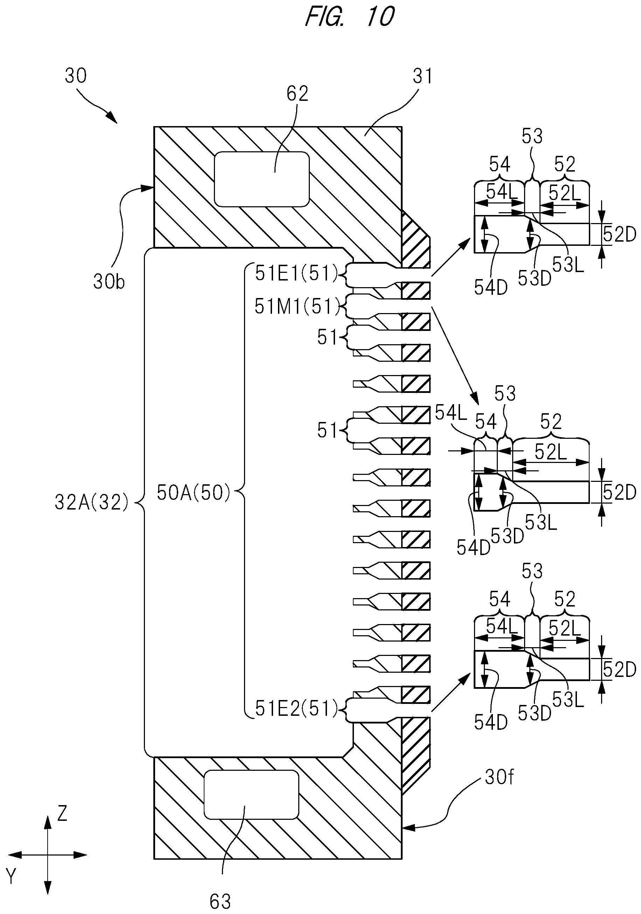

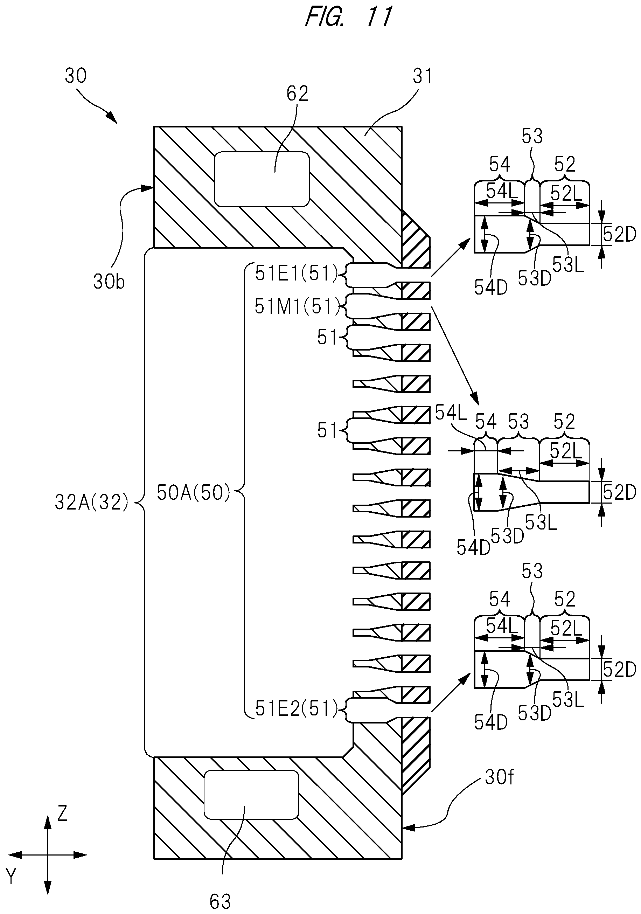

Next, a modification example of the nozzle shape explained with reference to FIGs. 6 and 8 will be explained. FIG. 10 is an explanatory diagram schematically showing a modification example of the plurality of nozzles shown in FIG. 6. FIG. 11 is an explanatory diagram showing a nozzle according to a modification example of FIG. 10.

The nozzle group 50 shown in FIG. 10 is different from the nozzle group 50 shown in FIG. 6 in that each of the plurality of nozzles 51 has a portion 54 in addition to the portion 52 and the portion 53. More specifically, each of the plurality of nozzles 51 of the nozzle group 50 shown in FIG. 10 has the portion 52 having the nozzle opening diameter 52D, the portion 53 arranged between the portion 52 and the opening 32A and having the nozzle opening diameter 53D becoming narrower when getting closer to the portion 52, and the portion 54 arranged between the portion 53 and the opening 32A and having a nozzle opening diameter 54D larger than the nozzle opening diameter 52D.

In order to decrease the variation in weight of the organic composite pellet, it is sufficient to make the static pressure of the end nozzle 51E1 lower than the static pressure of the non-end nozzle 51M1 in the molding step. Therefore, as a method of controlling the static pressures, a method of adjusting a length 54L of the portion 54 may be applied.

In the example shown in FIG. 10, the length 54L of the portion 54 of the end nozzle 51E1 is larger than the length 54L of the portion 54 of the non-end nozzle 51M1. As a result, in the molding step, the static pressure of the end nozzle 51E1 can be made lower than the static pressure of the non-end nozzle 51M1. In the example shown in FIG. 10, the length 52L of the portion 52 of the end nozzle 51E1 is smaller than the length 52L of the portion 52 of the non-end nozzle 51M1. In the modification example shown in FIG. 10, the static pressure of the end nozzle 51E1 can be decreased by the effect of the fact that the length 52L of the portion 52 of the end nozzle 51E1 is smaller and the effect of the fact that the length 54L of the portion 54 of the end nozzle 51E1 is larger.

In the example shown in FIG. 10, the end nozzle 51E2 has also the same structure as that of the end nozzle 51E1. In other words, the length 54L of the portion 54 of the end nozzle 51E2 is larger than the length 54L of the portion 54 of the non-end nozzle 51M1. As a result, in the molding step, the static pressure of the end nozzle 51E2 can be made lower than the static pressure of the non-end nozzle 51M1. The length 52L of the portion 52 of the end nozzle 51E2 is smaller than the length 52L of the portion 52 of the non-end nozzle 51M1. In the modification example shown in FIG. 10, the static pressure of the end nozzle 51E2 can be decreased by the effect of the fact that the length 52L of the portion 52 of the end nozzle 51E2 is smaller and the effect of the fact that the length 54L of the portion 54 of the end nozzle 51E2 is larger.

However, as described above, in order to collectively cut the organic composition discharged from each of the plurality of nozzles 51, in the pellet forming step, positions of outlet ports of the plurality of nozzles 51 in the Y direction shown in FIG. 6 are preferably the same as one another. Therefore, the total value of the length 52L, the length 53L and the length 54L of the end nozzle 51E1 is preferably the same as the total value of the length 52L, the length 53L and the length 54L of the non-end nozzle 51M1. Similarly, the total value of the length 52L, the length 53L and the length 54L of the end nozzle 51E2 is preferably the same as the total value of the length 52L, the length 53L and the length 54L of the non-end nozzle 51M1.

Except for the above-described differences, the plurality of nozzles 51 shown in FIG. 10 are the same as the plurality of nozzles 51 shown in FIG. 5. Therefore, the overlapping explanation will be omitted.

Next, the nozzle group 50 shown in FIG. 11 is different from the nozzle group 50 shown in FIG. 10 in that the lengths 52L of the portions 52 of the plurality of nozzles 51 are the same as one another.

As described above, in order to decrease the variation in weight of the organic composite pellet, in the molding step, it is sufficient to make the static pressure of the end nozzle 51E1 lower than the static pressure of the non-end nozzle 51M1. Therefore, when the length 54L of the portion 54 of the end nozzle 51E1 is larger than the length 54L of the portion 54 of the non-end nozzle 51M1 as shown in FIG. 11, even if the lengths 52L of the portions 52 of the plurality of nozzles 51 are the same as one another, the static pressure of the end nozzle 51E1 can be decreased.

In the example shown in FIG. 11, the lengths 52L of the plurality of portions 52 are the same as one another. On the other hand, the length 53L of the portion 53 of the end nozzle 51E1 is smaller than the length 53L of the portion 53 of the non-end nozzle 51M1. As a result, the total value of the length 52L, the length 53L and the length 54L of the plurality of nozzles 51 is the same as one another.

In the example shown in FIG. 11, the end nozzle 51E2 also has the same structure as that of the end nozzle 51E1. In other words, the length 54L of the portion 54 of the end nozzle 51E2 is larger than the length 54L of the portion 54 of the non-end nozzle 51M1. As a result, in the molding step, the static pressure of the end nozzle 51E2 can be made lower than the static pressure of the non-end nozzle 51M1. The length 52L of the portion 52 of the end nozzle 51E2 shown in FIG. 11 is the same as the length 52L of the portion 52 of the non-end nozzle 51M1.

Except for the above-described differences, the plurality of nozzles 51 shown in FIG. 11 are the same as the plurality of nozzles 51 shown in FIG. 10. Therefore, the overlapping explanation will be omitted.

In the foregoing, the invention made by the inventors of the present application has been concretely described on the basis of the embodiments and the examples. However, it is needless to say that the present invention is not limited to the foregoing embodiments and examples, and various modifications can be made within the scope of the present invention.

### EXPLANATION OF REFERENCE CHARACTERS

10 source-material supplying portion
11 source material
20 extruding portion
30 die
30b back surface
30c center
30f front surface
31 nozzle support portion
32, 32A, 32B opening (source-material introducing portion)
33 hard layer
40 cutter portion
41 rotary blade
50, 50A, 50B nozzle group
51 nozzle
51E1, 51E2, 51E3, 51E4, 51E5, 51E6 end nozzle
51M1 non-end nozzle
52, 53, 54 portion
52D, 53D, 54D nozzle opening diameter
52L, 53L, 54L length
61 heat-carrier flow channel
62 heat-carrier supplying flow channel
63 heat-carrier discharging flow channel
64 heat-carrier introducing portion
65 heat-carrier discharging portion
70 driving portion
71 motor
72 coupling
73 speed reducer
100 granulator
D61, D62, D63 separate distance

## Claims

1. A die comprising:
a first nozzle group in which a plurality of nozzles are next to one another in a first direction;
a nozzle support portion having a front surface on which the plurality of nozzles are arranged, a back surface opposite to the front surface, and a first opening communicating with each of the plurality of nozzles of the first nozzle group; and
a heat-carrier flow channel arranged on both sides of the first nozzle group in transparent plan view viewed from the front surface side and enabling a heat carrier to pass through in the first direction,
wherein each of the plurality of nozzles of the first nozzle group includes:
a first portion having a first nozzle opening diameter; and
a second portion arranged between the first portion and the first opening and having a nozzle opening diameter becoming narrower when getting closer to the first portion,
the plurality of nozzles include:
a first end nozzle arranged on either one end of arrangement of the plurality of nozzles in the first direction; and
a first non-end nozzle next to the first end nozzle in the first direction, and
a length of the first portion of the first end nozzle is smaller than a length of the first portion of the first non-end nozzle.

2. The die according to claim 1,
wherein the first nozzle group further includes a second end nozzle arranged on an end opposite to the first end nozzle in the first direction, and
a length of the first portion of the second end nozzle is smaller than a length of the first portion of the first non-end nozzle.

3. The die according to claim 2,
wherein, in transparent plan view viewed from the front surface side,
an outer shape of the nozzle support portion is circular, and
a plurality of the first nozzle groups are arranged in a circumferential direction of the nozzle support portion.

4. The die according to claim 2,
wherein the first nozzle group further includes a third end nozzle next to the first end nozzle in a second direction crossing the first direction, and
a length of the first portion of the third end nozzle is smaller than a length of the first portion of the first non-end nozzle.

5. The die according to claim 4,
wherein, in transparent plan view viewed from the front surface side,
an outer shape of the nozzle support portion is circular,
a plurality of the first nozzle groups are arranged in a circumferential direction of the nozzle support portion,
a heat-carrier supplying flow channel extending in the circumferential direction of the nozzle support portion and communicating with the heat-carrier flow channel is arranged between an outer circumference of the nozzle support portion and the first opening, and
a gap distance between the heat-carrier supplying flow channel and the first end nozzle is larger than a gap distance between the heat-carrier flow channel and the first non-end nozzle.

6. The die according to claim 5,
wherein a heat-carrier discharging flow channel extending in the circumferential direction of the nozzle support portion and communicating with the heat-carrier flow channel is arranged between a center of the nozzle support portion and the first opening, and
a gap distance between the heat-carrier discharging flow channel and the second end nozzle is larger than the gap distance between the heat-carrier flow channel and the first non-end nozzle.

7. The die according to claim 1,
wherein each of the plurality of nozzles of the first nozzle group further includes a third portion arranged between the second portion and the first opening and having a second nozzle opening diameter becoming larger than the first nozzle opening diameter, and
a length of the third portion of the first end nozzle is larger than a length of the third portion of the first non-end nozzle.

8. A die comprising:
a first nozzle group in which a plurality of nozzles are next to one another in a first direction;
a nozzle support portion having a front surface on which the plurality of nozzles are arranged, a back surface opposite to the front surface, and a first opening communicating with each of the plurality of nozzles of the first nozzle group; and
a heat-carrier flow channel arranged on both sides of the first nozzle group in transparent plan view viewed from the front surface side and enabling a heat carrier to pass through in the first direction,
wherein each of the plurality of nozzles of the first nozzle group includes:
a first portion having a first nozzle opening diameter;
a second portion arranged between the first portion and the first opening and having a nozzle opening diameter becoming narrower when getting closer to the first portion; and
a third portion arranged between the second portion and the first opening and having a second nozzle opening diameter becoming larger than the first nozzle opening diameter,
the plurality of nozzles include:
a first end nozzle arranged on either one end of arrangement of the plurality of nozzles in the first direction; and
a first non-end nozzle next to the first end nozzle in the first direction, and
a length of the third portion of the first end nozzle is larger than a length of the third portion of the first non-end nozzle.

9. A granulator comprising:
a cylindrical extrusion portion enabling a source material to be extruded forward while being pressurized;
a die attached to a tip of the extrusion portion; and
a cutter portion attached to a tip of the die and enabling a material passed through the die to be cut,
wherein the die includes:
a first nozzle group in which a plurality of nozzles are next to one another in a first direction;
a nozzle support portion having a front surface on which the plurality of nozzles are arranged, a back surface opposite to the front surface, and a first opening communicating with each of the plurality of nozzles of the first nozzle group; and
a heat-carrier flow channel arranged on both dies of the first nozzle group in transparent plan view viewed from the front surface side and enabling a heat carrier to pass through in the first direction,
each of the plurality of nozzles of the first nozzle group includes:
a first portion having a first nozzle opening diameter; and
a second portion arranged between the first portion and the first opening and having a nozzle opening diameter becoming narrower when getting closer to the first portion,
the plurality of nozzles include:
a first end nozzle arranged on either one end of arrangement of the plurality of nozzles in the first direction; and
a first non-end nozzle next to the first end nozzle in the first direction, and
a length of the first portion of the first end nozzle is smaller than a length of the first portion of the first non-end nozzle.

10. The granulator according to claim 9,
wherein the first nozzle group further includes a second end nozzle on an end opposite to the first end nozzle in the first direction, and
a length of the first portion of the second end nozzle is smaller than the length of the first portion of the first non-end nozzle.

11. The granulator according to claim 10,
wherein, in transparent plan view viewed from the front surface side,
an outer shape of the nozzle support portion is circular, and
a plurality of the first nozzle groups are arranged in a circumferential direction of the nozzle support portion.

12. The granulator according to claim 10,
wherein the first nozzle group further includes a third end nozzle next to the first end nozzle in a second direction crossing the first direction, and
a length of the first portion of the third end nozzle is smaller than the length of the first portion of the first non-end nozzle.

13. The granulator according to claim 12,
wherein, in transparent plan view viewed from the front surface side,
an outer shape of the nozzle support portion is circular,
a plurality of the first nozzle groups are arranged in a circumferential direction of the nozzle support portion,
a heat-carrier supplying flow channel extending in the circumferential direction of the nozzle support portion and communicating with the heat-carrier flow channel is arranged between an outer circumference of the nozzle support portion and the first opening, and
a gap distance between the heat-carrier supplying flow channel and the first end nozzle is larger than a gap distance between the heat-carrier flow channel and the first non-end nozzle.

14. The granulator according to claim 13,
wherein a heat-carrier discharging flow channel extending in the circumferential direction of the nozzle support portion and communicating with the heat-carrier flow channel is arranged between a center of the nozzle support portion and the first opening, and
a gap distance between the heat-carrier discharging flow channel and the second end nozzle is larger than the gap distance between the heat-carrier flow channel and the first non-end nozzle.

15. The granulator according to claim 8,
wherein each of the plurality of nozzles of the first nozzle group further includes a third portion arranged between the second portion and the first opening and having a second nozzle opening diameter becoming larger than the first nozzle opening diameter, and
the length of the third portion of the first end nozzle is larger than the length of the third portion of the first non-end nozzle.

16. A granulator comprising:
a cylindrical extrusion portion enabling a source material to be extruded forward while being pressurized;
a die attached to a tip of the extrusion portion; and
a cutter portion attached to a tip of the die and enabling a material passed through the die to be cut,
wherein the die includes:
a first nozzle group in which a plurality of nozzles are next to one another in a first direction;
a nozzle support portion having a front surface on which the plurality of nozzles are arranged, a back surface opposite to the front surface, and a first opening communicating with each of the plurality of nozzles of the first nozzle group; and
a heat-carrier flow channel arranged on both sides of the first nozzle group in transparent plan view viewed from the front surface side and enabling a heat carrier to pass through in the first direction,
each of the plurality of nozzles of the first nozzle group includes:
a first portion having a first nozzle opening diameter;
a second portion arranged between the first portion and the first opening and having a nozzle opening diameter becoming narrower when getting closer to the first portion; and
a third portion arranged between the second portion and the first opening and having a second nozzle opening diameter becoming larger than the first nozzle opening diameter,
the plurality of nozzles include:
a first end nozzle arranged on either one end of arrangement of the plurality of nozzles in the first direction; and
a first non-end nozzle next to the first end nozzle in the first direction, and
a length of the third portion of the first end nozzle is larger than a length of the third portion of the first non-end nozzle.

17. A granulator of a method of manufacturing an organic composite pellet, comprising steps of:
an extruding step of extruding a source material forward while pressurizing it;
a molding step of molding the source material extruded in the extruding step by making the source material pass through a die; and
a pellet forming step of forming the organic composite pellet by cutting the source material molded in the molding step,
wherein the die includes:
a first nozzle group in which a plurality of nozzles are next to one another in a first direction;
a nozzle support portion having a front surface on which the plurality of nozzles are arranged, a back surface opposite to the front surface, and a first opening communicating with each of the plurality of nozzles of the first nozzle group; and
a heat-carrier flow channel arranged on both sides of the first nozzle group in transparent plan view viewed from the front surface side and enabling a heat carrier to pass through in the first direction,
each of the plurality of nozzles of the first nozzle group includes:
a first portion having a first nozzle opening diameter; and
a second portion arranged between the first portion and the first opening and having a nozzle opening diameter becoming narrower when getting closer to the first portion,
the plurality of nozzles include:
a first end nozzle arranged on either one end of arrangement of the plurality of nozzles in the first direction; and
a first non-end nozzle next to the first end nozzle in the first direction, and
in the molding step, a static pressure of the first end nozzle is lower than a static pressure of the first non-end nozzle.

18. The granulator of a method of manufacturing the organic composite pellet according to claim 17,
wherein a length of the first portion of the first end nozzle is smaller than a length of the first portion of the first non-end nozzle.

19. The granulator of a method of manufacturing the organic composite pellet according to claim 17,
wherein each of the plurality of nozzles of the first nozzle group further includes a third portion arranged between the second portion and the first opening and having a second nozzle opening diameter becoming larger than the first nozzle opening diameter, and
a length of the third portion of the first end nozzle is larger than a length of the third portion of the first non-end nozzle.
